(19) **Europäisches Patentamt / European Patent Office / Office européen des brevets**

(11) **EP 1 688 722 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
*G01K 7/42* (2006.01)   *H01M 10/48* (2006.01)

(21) Anmeldenummer: **06001420.6**

(22) Anmeldetag: **24.01.2006**

(54) **Einrichtung und Verfahren zur Ermittlung der Temperatur in einer elektrischen Batterie**

Device and method for determining the temperature in an electric battery

Dispositif et procédé destinés à la détermination de la température dans une pile électrique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.02.2005 DE 102005004998**

(43) Veröffentlichungstag der Anmeldung:
**09.08.2006 Patentblatt 2006/32**

(73) Patentinhaber: **VB Autobatterie GmbH & Co. KGaA 30419 Hannover (DE)**

(72) Erfinder:
• **Laig-Hörstebrock, Helmut, Dr. 60320 Frankfurt (DE)**
• **Shirazi, Sepher 39826 Garbsen (DE)**

(74) Vertreter: **Gerstein, Hans Joachim et al Gramm, Lins & Partner GbR Theodor-Heuss-Strasse 1 38122 Braunschweig (DE)**

(56) Entgegenhaltungen:
**DE-A1- 10 131 259      DE-A1- 10 134 065**
**GB-A- 2 151 862       US-A- 6 076 964**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ermittlung der Temperatur in einer elektrischen Batterie durch Bestimmen mindestens eines Temperaturwertes an einer jeweiligen Temperaturmessstelle außerhalb der Batterie in der Batterieumgebung und Ermitteln mindestens eines elektrischen Leistungswertes in Abhängigkeit von einer mit dem Betrieb der Batterie verknüpften Leistungskenngröße.

Die Erfindung betrifft insbesondere eine Einrichtung zur Ermittlung der Temperatur in einer elektrischen Batterie mit mindestens einem außerhalb der Batterie in der Batterieumgebung angeordneten Temperatursensor, einem Spannungsmessgerät zur Messung der Batterieklemmenspannung, einer Einrichtung zur Ermittlung des Batterieklemmenstroms, und mit einer Auswerteeinheit, die mit dem mindestens einen Temperatursensor, dem Spannungsmessgerät und der Einrichtung zur Ermittlung des Batterieklemmenstroms verbunden ist.

Die Kenntnis der Batterietemperatur wird oftmals zur Überwachung und/oder der Steuerung einer Batterie benötigt, beispielsweise um die Ladespannung in Abhängigkeit von der Batterietemperatur festzulegen oder den Ladezustand möglichst genau zu ermitteln. Dabei besteht das Problem, dass aus diversen Gründen kein Temperatursensor in der Batterie eingebaut ist oder eingebaut werden kann. So entstehen beispielsweise durch einen zusätzlichen Temperatursensor erhöhte Kosten. Zudem ist zusätzlicher Verkabelungsaufwand an der Batterie erforderlich, um einen in die Batterie integrierten Temperatursensor an eine Auswerteeinheit anzuschließen.

In den DE 198 06 135 A1 wird daher vorgeschlagen, die Temperatur einer Batterie in einem Fahrzeugbordnetz in Abhängigkeit von mindestens zwei außerhalb der Batterie gemessenen Temperaturen nach einem thermischen Modell zu berechnen. Dabei soll wenigstens die Motortemperatur und die Umgebungstemperatur berücksichtigt werden.

Weiterhin ist aus dem US-Patent 5,079,716 ein Verfahren zur Bestimmung der Batterietemperatur durch Addition eines vorhergehend ermittelten Batterietemperaturwertes zu dem Produkt der mittleren Fahrzeuggeschwindigkeit und der Summe mehrerer in der Umgebung der Batterie gemessene Temperaturwerte bekannt.

In dem US-Patent 5,711,605 ist ein Verfahren zur Vorhersage der Batterietemperatur durch Bestimmung der Lufttemperatur der Umgebung und von Wärmeübertragungskoeffizienten in Verbindung mit empirischen Faktoren beschrieben.

Auch in der DE 101 31 259 A1 wird ein Verfahren zur Ermittlung einer Batterietemperatur in Abhängigkeit von verschiedenen Temperaturen, insbesondere der Motor- und der Umgebungstemperatur vorgeschlagen, wobei eine weitere Temperatur eines in unmittelbarer Umgebung der Batterie angeordneten Steuergeräts sowie der Betriebszustand des Steuergerätes berücksichtigt wird.

In dem US-Patent 4,342,963 wird ein automatisierter Batterietester beschrieben, der den Einfluss der Elektrolyt-Temperatur kompensiert, indem ein zum Anschluss an die Batterie vorgesehenes Verbindungsteil einen Temperaturfühler enthält, und die Testbedingungen in Abhängigkeit von den zwei gemessenen Temperaturwerten geändert werden, die vor bzw. nach Anschluss des Verbindungsteils an die Batterie erhalten wurden.

Die DE 102 08 651 A1 offenbart ein Verfahren zur Ladezustandsermittlung einer Batterie in Abhängigkeit von einer Temperaturdifferenz, die aus einer Wärmebilanz bestimmt wird. Die gemessenen Temperaturen sind Innentemperaturen der Batterie und die Wärmebilanz bezieht sich auf interne Vorgänge der Batterie.

In der DE 101 34 065 A1 ist ein Verfahren zur Vorhersage der elektrischen Belastbarkeit eines Akkumulators beschrieben, bei dem die mit dem Stromfluss durch die Batterie verbundenen Wärmeeffekte berücksichtigt werden. Dabei findet ein Abgleich zwischen der Umgebungstemperatur und der Batterietemperatur statt. Die Wärmebilanz berücksichtigt die Joule'sche Wärme durch Aufheizen der Batterie durch Stromfluss und eine reversible Heizleistung.

Ausgehend hiervon ist es Aufgabe der vorliegenden Erfindung, ein verbessertes Verfahren und eine verbesserte Einrichtung zur Ermittlung der Temperatur in einer elektrischen Batterie durch Messen mindestens eines Temperaturwertes an einer jeweiligen Temperaturmessstelle außerhalb der Batterie in der Batterieumgebung zu schaffen, um die Batterietemperatur noch genauer bestimmen zu können.

Die Aufgabe wird mit dem gattungsgemäßen Verfahren erfindungsgemäß gelöst durch Ermitteln der an der mindestens einen Temperaturmessstelle umgesetzten elektrischen Leistung als weiterer elektrischen Leistungswert, Wichten der elektrischen Leistungswerte und Temperaturwerte jeweils mit einem zugeordneten Wichtungsfaktor und Ermitteln der Temperatur in der elektrischen Batterie aus einer Energiebilanz in Abhängigkeit von dem mindestens einen gewichteten Temperaturwert und von den gewichteten elektrischen Leistungswerten.

Durch die zusätzliche Ermittlung und Einbeziehung der an der Temperaturmessstelle umgesetzten elektrischen Leistung in Verbindung mit der bekannten Nutzung von Temperaturwerten aus der Umgebung der Batterie ist es möglich, die Batterietemperatur mit einfachen Maßnahmen wesentlich genauer zu bestimmen.

Die Verlustleistung an der Temperaturmessstelle ist im Allgemeinen so klein (z. B. 0.5W), dass sie die Batterietemperatur nicht direkt verändert, aber sie beeinflusst die Temperaturmessung. Es hat sich gezeigt, dass man den verfälschenden Einfluss der Verlustleistung an der Temperaturmessstelle recht einfach dadurch berücksichtigen kann, dass man die Verlustleistung der Temperaturmessstelle recht einfach dadurch berücksichtigen kann, dass man die Verlustleistung der Temperaturmessstelle mit geeignetem Faktor in den Leistungsterm N integriert.

Durch die zusätzliche Auswertung der mit passendem Wichtungsfaktor gewichteten Verlustleistung der Messvorrichtung werden die wesentlichen Temperaturquellen und Temperatursenken besser erfasst. Die aktuelle Batterietemperatur wird vorzugsweise durch Integrieren der über die Zeit ermittelten Summe aus dem mindestens einen elektrischen Leistungswert und mindestens einem Temperaturwert ermittelt. Besonders vorteilhaft ist es jedoch, wenn der mindestens eine elektrische Leistungswert und mindestens eine

Temperaturwert in diskreten Zeitschritten zu der unmittelbar vorher ermittelten Batterietemperatur fortlaufend aufsummiert wird, um die aktuelle Batterietemperatur zu ermitteln. Die aktuelle Batterietemperatur wird somit aus einer Energiebilanz durch Auswertung der umgesetzten Leistung und Temperaturänderungen bestimmt.

Die Wichtungsfaktoren können dabei in Abhängigkeit von dem aktuellen Betriebszustand der Batterie gewählt sein und werden bevorzugt in Abhängigkeit von den Wärmeübergangswerten der Batterie und den Wärmeübergangswerten der Umgebung des zugeordneten Objektes gewählt. Vorteilhaft ist es, wenn die Wichtungsfaktoren in Abhängigkeit von der spezifischen Umgebung, insbesondere von einem Kraftfahrzeugtyp, und dem Batterietyp gewählt werden.

Durch die korrekte Auswahl der Wichtungsfaktoren wird somit das grundlegende Prinzip der Batterietemperaturermittlung aus den elektrischen Leistungswerten und Temperaturwerten an die konkrete Einbausituation der Batterie und den Batterietyp angepasst. Das Auffinden der Wichtungsfaktoren kann vom Fachmann leicht durch Versuche erfolgen.

Als Leistungskenngröße zur Ermittlung der elektrischen Leistungswerte ist vorzugsweise der z. B. an den Batterieklemmen gemessene Batterieklemmenstrom geeignet. Dieser ist sowohl ein Maß für die in der Batterie umgesetzte elektrische Leistung, als auch ein Maß für die an den elektrischen Bauteilen, die mit der Batterie verbunden sind, umgesetzten Verlustleistungen, die zu einer Wärmeentwicklung führen.

Es gibt mitunter Konstellationen, dass sich dicht bei der Batterie noch andere Objekte mit großer Wärmekapazität befinden, z. B. ein Behälter der Scheibenwaschanlage. In diesem Fall muss abgeschätzt werden, am besten experimentell am Fahrzeug, welche Situation vorliegt.

1) Der einfachste Fall liegt vor, wenn der Behälter weit genug von der Batterie entfernt ist, so dass er mit der durch $T_{Mess}$ erfassten Umgebung zusammenfällt. Dann gilt das bisher beschriebene Verfahren.

2) Der Behälter liegt sehr nahe an der Batterie. Dann ist zu unterscheiden:

    a) Die Zeitkonstante des Behälters für Temperaturausgleich ist sehr klein. Dann kann statt der Wärmekapazität der Batterie $C_B$ die Summe aus den Wärmekapazitäten von Batterie und Behälter zur Normierung genommen werden.

    b) Die Zeitkonstante des Behälters entspricht etwa der Zeitkonstanten der Batterie. Dann ist simultan auch die Differentialgleichung des Behälters zu lösen, z. B. wenn $T_O$ die Temperatur des Objektes ist und $C_O$ die Wärmekapazität des Objektes, und es gilt etwa:

$$T_O = T_{O-1} + (k_{O1} \cdot T_B + k_{O2} \cdot T_{Mess} - k_{O0} \cdot T_{O-1}) / C_O \text{ mit } k_{O1} + k_{O2} = k_{O0}$$

mit passend zu bestimmenden Konstanten $k_{O1}$, $k_{O2}$, und $k_{O0}$.

Bei einer Fahrzeugbatterie erfolgt die Ermittlung der Batterietemperatur vorzugsweise mit einem Gleichungssystem der Art:

$$T_B = T_{B-1} + N/C_B \cdot dt + \left\{ \sum_{i=1}^{n} k_i \cdot T_i - k_0 \cdot T_{B-1} \right\} / C_B \cdot dt \, ,$$

wobei $T_{B-1}$ die vorhergehend berechnete Batterietemperatur $T_B$, $C_B$ die Wärmekapazität der Batterie, $k_i$ mit i=1 bis n (ganzzahlig) die Wichtungsfaktoren und $T_i$ mindestens ein (n=1) an Objekten in der Umgebung der Batterie gemessener weiterer Temperaturwert ist, und wobei N der elektrische Leistungswert ist. Ein Temperaturwert $T_i$ kann beispielsweise die Motortemperatur eines in der Umgebung der Batterie angeordneten Fahrzeugmotors sein. Ein anderer Temperaturwert $T_i$ kann die mit einem in eine Messschaltung integrierten Temperatursensor gemessene Temperatur sein.

Es wird deutlich, dass der auf die Wärmekapazität der Batterie bezogene Leistungswert in zeitdiskreten Schritten dt sowie die gewichtete Summe aller gemessenen Temperaturwerte abzüglich der gewichteten vorher berechneten Batterietemperatur bezogen auf die Wärmekapazität der Batterie in einem Zeitschritt auf die vorhergehend berechnete Bätterietemperatur addiert wird, um die aktuelle Batterietemperatur zu erhalten. Durch die auf die Wärmekapazität der Batterie bezogenen Leistungswerte wird die üblicherweise ausschließlich aus den Temperaturwerten ermittelte Wärmebilanz um die wesentlichen Einflussfaktoren ergänzt, so dass die ermittelte Batterietemperatur mit der tatsächlichen Batterietemperatur wesentlich besser übereinstimmt.

Dabei sollte die Summe der Wichtungsfaktoren gleich dem Wichtungsfaktor $k_0$ für die vorhergehend ermittelte Batterietemperatur sein. Es hat sich nämlich herausgestellt, dass die Präzision des Verfahrens hierdurch erheblich gesteigert werden kann.

Der elektrische Leistungswert wird vorzugsweise mit einem Gleichungssystem der Art:

$$N = N_B + \sum_{j=1}^{m} k_j \cdot N_j$$

berechnet, wobei $N_B$ ein zu der von der Batterie umgesetzten elektrischen Leistung proportionaler Wert ist, $N_j$ zu von elektrischen Bauelementen in der Umgebung der Batterie umgesetzte elektrische Leistung proportionale Werte und $k_j$ Wichtungsfaktoren sind. Diese Wichtungsfaktoren $k_j$ können durch Versuche für einen Fahrzeugtyp und Batterietyp bestimmt werden.

Der zu der von der Batterie umgesetzten Leistung proportionale Leistungswert $N_B$ ist vorzugsweise das Produkt des Batterieklemmenstroms mit der Differenz zwischen der Batterieklemmenspannung und der Batterieruhespannung ($N_B = (U - U_{00}) \cdot i$). Das Verfahren kann weiter verbessert werden, indem der Batterieruhespannungswert $U_{00}$ um einen für das Batteriesystem charakteristischen konstanten Spannungswert korrigiert wird, der die Wärmetönung der elektrochemischen Reaktionen beschreibt. Im Falle eines Bleiakkumulators wird der Batterieruhespannungswert $U_{00}$ vorzugsweise um ca. 0,06 V/Zelle erniedrigt.

Eine weitere Verbesserung ist möglich in solchen Fällen, in denen der Batterieklemmenstrom I nicht vollständig bei der Hauptreaktion $I^H$ (Lade- bzw. Entladereaktion) umgesetzt wird, sondern teilweise in einer Nebenreaktion IN, wie z. B. in Wasserzersetzung, und/oder dem internem Sauerstoff-Kreislauf ("Gasverzehr") im Falle von verschlossenen Bleiakkumulatoren:

$$I = I^H + I^N.$$

Dann wird für jeden Strombeitrag $I_l$ als Ruhespannung die um eine die Wärmetönung der Reaktion beschreibende Konstante korrigierte Ruhespannung der jeweiligen Reaktion angesetzt, also z. B.

$$N_B = (U - U_{00}^H) * I^H + (U - U_{00}^N) * I^N.$$

Für die Hauptreaktion ist die eingesetzte Ruhespannung $U_{00}^H$ die schon oben betrachtete Spannung der äquilibrierten Batterie. Für die Nebenreaktionen sind als Ruhespannungen $U_{00}^N$ für die Nebenreaktion der Wasserzersetzung ein Wert von ca. 1,48V/Zelle und für den Sauerstoff-Kreislauf ein Wert von ca. 0,0V/Zelle einzusetzen.

Ein weiterer elektrischer Leistungswert kann die von einem in den Stromkreis geschalteten Shunt umgesetzte Leistung beschreiben. Dieser Shunt-Leistungswert wird dabei als Produkt des Shuntwiderstands mit dem Quadrat des Batterieklemmenstroms berechnet.

Ein weiterer elektrischer Leistungswert ist die an der mindestens einen Temperaturmessstelle außerhalb der Batterie umgesetzte elektrische Leistung. Besonders vorteilhaft ist es dabei, wenn die Temperatur mit einem ohnehin an einer Messschaltung vorhandenen Temperatursensor bestimmt wird. Dabei wird dieser Temperaturwert jedoch auch von der elektrischen Leistung beeinflusst, die in der Messschaltung umgesetzt wird. Diese elektrische Leistung sollte daher separat in Abhängigkeit von der an der Messschaltung gemessenen Strom und/oder Spannung oder durch andere geeignete Messgrößen für die in der Messschaltung umgesetzte elektrische Leistung bestimmt werden. Damit können die für die Messschaltung bestimmten elektrischen Leistungswerte und Temperaturwerte voneinander entkoppelt werden.

Die Aufgabe wird weiterhin durch die gattungsgemäße Einrichtung mit einer Auswerteeinheit gelöst, die zur Durchführung des oben genannten Verfahrens beispielsweise durch Programmierung eines Mikroprozessors oder Mikrokontrollers ausgebildet ist. Die Auswerteeinheit kann aber auch als ASIC fest verdrahtet realisiert werden.

Die Erfindung wird nachfolgend anhand der beigefügten Zeichnungen beispielhaft näher erläutert. Es zeigen:

Figur 1 -   Skizze einer Starterbatterie in einem Kraftfahrzeug mit einem Shunt an der Polklemme und einer Auswerteeinheit;

Figur 2 -   Blockdiagramm einer Batterie mit daran angeschlossenen Verbrauchern zur Darstellung der Wärmequellen und Wärmesenken;

Figur 3 -   Diagramm der mit einer Temperatursonde in der Nähe der Batterie gemessenen Temperatur, der tatsächlichen Batterietemperatur und der mit dem erfindungsgemäßen Verfahren ermittelten Temperatur bei einer 44 Ah Batterie, die in einem Ford Fiesta 1,4 eingebaut ist.

Figur 4 -   Vergrößerte Ausschnittsdarstellung des Diagramms aus Figur 3 für den Zeitbereich von 0 bis 10.000 sec;

Figur 5 -   Diagramm der gemessenen und tatsächlichen Temperatur über die Zeit bei einer 12V/48Ah Batterie und einer zusätzlichen Wärmequelle in der Nähe des Temperatursensors.

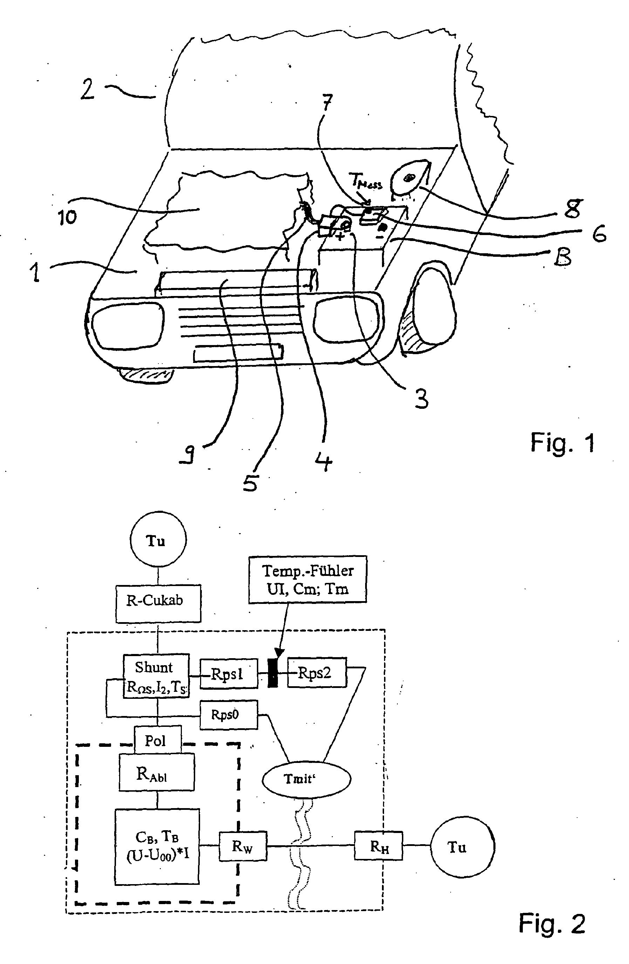

Die Figur 1 lässt eine Skizze eines Motorraums 1 eines Kraftfahrzeuges 2 mit einer Batterie B in Form eines Bleiakkumulators als Starterbatterie erkennen. An die Batterieklemme 3 für den Plus-Pol ist ein Shunt 4 angeschlossen, der einen Shuntwiderstand $R_S$ aufweist. Von dem Shunt 4 verläuft ein Kupferkabel 5 zu den Fahrzeugverbrauchern, wie zum Beispiel dem Anlasser und Generator. Weiterhin geht von dem Shunt 4 ein Netzkabel zu einer Messschaltung 6 ab, die als ASIC (anwenderspezifische integrierte Schaltung) realisiert ist. Die Messschaltung 6 hat einen integrierten Temperatursensor 7 und vorzugsweise eine Auswerteeinheit zur Bestimmung der Batterietemperatur $T_B$ in der Batterie B.

Ergänzend zu der Batterie B sind in bekannter Weise weitere Wärmequellen bzw. Wärmesenken eingebaut, wie beispielsweise ein Waschwasserbehälter 8 für Scheibenwischwasser, ein Kühler 9 und der Verbrennungsmotor 10.

Die Figur 2 lässt ein Blockdiagramm der in der Figur 1 dargestellten Anordnung mit den Wärmequellen und Wärmesenken erkennen.

Die Batterie B hat eine Wärmekapazität $C_B$ sowie eine zu ermittelnde Batterieinnentemperatur $T_B$. Die Wärmekapazität $C_B$ wird als bekannt vorausgesetzt und kann für jeden Batterietyp leicht bestimmt werden.

Für die in der Batterie B umgesetzte Leistung wird ein elektrischer Leistungswert $N_B$ aus dem Produkt des Batterieklemmenstroms I und der Differenz der Batterieklemmenspannung U zur Ruhespannung $U_{00}$ ermittelt.

$$N_B = (U - U_{00}) \cdot I.$$

Es kann auch der Fall berücksichtigt werden, dass der Batterieklemmenstrom I nicht vollständig bei der Hauptreaktion (Lade- bzw. Entladereaktion) umgesetzt wird (Hauptreaktionsstrom $I^H$), sondern teilweise in einer Nebenreaktion (Nebenreaktion zu Strom IN), wie z. B. in der Wasserzersetzung und/oder dem internen Sauerstoff-Kreislauf ("Gasverzehr"). Im Falle von verschlossenen Bleiakkumulatoren:

$$I = I^H + I^N.$$

Dann wird für jeden Strombeitrag $I_I$ als Ruhespannung D um einen die Wärmetönung der Reaktion beschreibende konstante korrigierte Ruhespannung $U_{00}{}^H$ der Hauptreaktion und $U_{00}{}^N$ der Nebenreaktion angesetzt. Dies kann z. B. nach der Formel

$$N_B = (U - U_{00}{}^H) * I^H + (U - U_{00}{}^N) * I^N$$

erfolgen. Für die Hauptreaktion ist die eingesetzte Ruhespannung $U_{00}{}^H$ die Spannung der äquilibrierten Batterie. Für die Nebenreaktionen sind als Ruhespannung $U_{00}{}^N$ für die Nebenreaktion der Wasserzersetzung ein Wert von ca. 1.48V/Zelle und für den Sauerstoff-Kreislauf ein Wert von ca. 0,0V/Zelle einzusetzen.

Aus der Figur 2 ist erkennbar, dass von der in der Batterie B erzeugten Wärme Wärmeenergie über den Wärmewiderstand $R_W$ der Batteriewandung und ggf. den Wärmewiderstand $R_H$ der Hülle für die Batterie B an die Umgebung abgegeben wird und umgekehrt, so dass die Außentemperatur $T_U$ und die Batterieinnentemperatur $T_B$ in Wechselwirkung zueinander stehen.

Weiterhin fließt Wärmeenergie über den Wärmewiderstand $R_{Abl}$ der Bleiableitung in der Batterie B bis zum Pol 3 der Batterie B und von dort bis zu dem Shunt 4. Die Shunttemperatur $T_S$ ist durch diesen Wärmefluss sowie durch die von dem Shunt 4 erzeugten Wärme aufgrund des Stromflusses durch den Shunt 4 bestimmt. Es wird daher ein weiterer elektrischer Leistungswert $N_S$ als Produkt des elektrischen Widerstandes $R_{\Omega S}$ des Shunt 4 und dem Quadrat des Batteriestroms bestimmt. Der Shunt 4 ist mit dem Temperatursensor 7 gekoppelt, der an oder in der Messschaltung 6 angeordnet ist und von der Temperatur $T_{mit}$ in der Umgebung des Temperatursensors 7 beeinflusst wird. Die Wärmewiderstände $R_{PS1}$, $R_{PS2}$ und $R_{PS0}$ am Temperatursensor 7 bestimmen den weiteren Wärmefluss vom Shunt 4 zum Temperatursensor 7 sowie vom Shunt 4 und der Messschaltung 6 zur Umgebung des Temperatursensors 7. Diese Temperatur $T_{mit}$ in der Umgebung des Temperatursensors 7 wird somit wesentlich durch den Wärmefluss vom Shunt 4, von der Messschaltung 6 und von der Batterie 1 in die Umgebung bestimmt.

Weiterhin existiert ein Wärmefluss vom Shunt 4 über das Kupferkabel 5 in die Umgebung, wobei der Wärmefluss durch den Wärmewiderstand $R_{CuKab}$ des Kupferkabels 5 beeinflusst ist.

Um einen elektrischen Leistungswert $N_{Mess}$ der Messschaltung 6 sowie einen Temperaturwert $T_{Mess}$ der Messschaltung 6 zu berücksichtigen, kann zudem die Spannung U, der Strom I und die Wärmekapazität $C_{Mess}$ der Messschaltung 6 und U, der Strom I und die Wärmekapazität $C_{Mess}$ der Messschaltung 6 und ihrer näheren Umgebung genutzt werden.

Bei dem Verfahren werden somit als Wärmequellen im Wesentlichen die Batterie B, der Shunt 4 und die Messschaltung 6 berücksichtigt. Gegebenenfalls kann auch die elektrische Leistung und/oder Temperatur angrenzender Objekte, wie des Waschwasserbehälters 8, des Kühlers 9 oder des Motors 10 berücksichtigt werden. Da der Waschwasserbehälter 8 im Normalfall eine Wärmesenke ist, kann diese durch die Waschwassertemperatur $T_W$ bezogen auf die aktuelle Wärmekapazität $C_W$ des Waschwasserbehälters 7 und dessen Inhalt als Einflussgröße zur Ermittlung der Batterietemperatur $T_B$ genutzt werden. Die Wärmekapazität $C_W$ des Waschwasserbehälters 7 ist dabei stark von dem Füllstand im Waschwasserbehälter 8 abhängig.

Die Wärmewege sind wie folgt:

Der Hauptwärmeweg führt von der Batterie B über den Wärmewiderstand $R_W$ der Batteriewandung und ggf. dem Wärmewiderstand $R_H$ der Hülle für die Batterie B nach außen mit der Außentemperatur $T_U$.

Ein Teil der Wärme fließt über die elektrischen Leiter von der Batterie B über den Wärmewiderstand $R_{Abl}$ der Bleiableitung bis zum Pol 3 und bis zum Shunt 4 sowie das Batteriekabel 5 mit dem Wärmewiderstand $R_{CuKab}$ in die Umgebung mit der Außentemperatur $T_U$ ab.

Ein geringerer Wärmeabfluss führt von dem Shunt 4 über den Wärmewiderstand $R_{PS1}$ zwischen Shunt 4 und Temperatursensor 7 zur Messschaltung 6 mit dem Temperatursensor 7. Von dort wird Wärme über den Wärmewiderstand $R_{PS2}$ zwischen Temperatursensor 7 und der Umgebung des Temperatursensors 7 mit der Temperatur $T_{mit}$ abgeführt.

Parallel fließt ein geringer Teil von Wärme von dem Shunt 4 über den Wärmewiderstand $R_{PS0}$ zwischen Shunt 4 und der Umgebung des Temperatursensors 7 mit der Temperatur $T_{mit}$.

In der einfachsten Ausführungsform wird die Batterietemperatur $T_B$ im Inneren der Batterie B aus dem mit dem Temperatursensor 7 an der Temperaturmessstelle in der Umgebung der Batterie B gemessenen Temperatur $T_M$ sowie den elektrischen Leistungswerten $N_B$ der Batterie, $N_S$ des Shunts und $N_{Mess}$ der Messschaltung 6 mit folgender Gleichung ermittelt:

$$T_B = T_{B-1} + N/C_B \cdot dt + \{k_0 \cdot T_{Mess} - k_0 \cdot T_{B-1}\}/C_B \cdot dt$$

und

$$N = N_B + k_{N1} \cdot N_S + k_{N2} \cdot N_{Mess}.$$

Dabei ist $T_{B-1}$ die im vorhergehenden Zeitintervall dt ermittelte Batterietemperatur, $C_B$ die Wärmekapazität der Batterie, $k_0$ ein Wichtungsfaktor für die Temperaturwerte und $k_{N1}$ sowie $k_{N2}$ Wichtungsfaktoren für die elektrischen Leistungswerte Ns und $N_{Mess}$.

Die Wichtungsfaktoren $k_0$ für den Temperaturwert $T_{Mess}$ und für die vorhergehend ermittelte Batterietemperatur $T_{B-1}$ sind gleich gewählt, da bei mehreren Temperaturwerten die Summe der zugehörigen Wichtungsfaktoren $k_i$ gleich dem Wichtungsfaktor $k_0$ für die vorhergehend ermittelte Batterietemperatur $T_{B-1}$ sein sollte.

Die elektrischen Leistungswerte $N_B$, $N_S$ und $N_{Mess}$ werden gewichtet aufsummiert und ergeben einen resultierenden elektrischen Leistungswert N.

Mit diesem Gleichungssystem wird die Situation annähernd berücksichtigt, dass der Temperatursensor 7 nicht die wahre Umgebungstemperatur am Einbauort der Batterie B, zum Beispiel unter der Motorhaube oder im Kofferraum sieht, sondern besonders batterienah angeordnet ist. Weiterhin sind die wesentlichen lokalen Wärmequellen berücksichtigt, die die Temperaturmessung durch den Temperatursensor 7 an der Messschaltung 6 beeinflussen, zum Beispiel die elektronische Erwärmung des Temperatursensors 7 direkt oder der sich in der Nachbarschaft des Temperatursensors 7 erwärmende Shunt 4.

Der Leistungswert $N_B$ für die Batterie wird aus der Batterieklemmenspannung U und der Ruhespannung $U_{00}$ sowie dem Batterieklemmenstrom I aus der Formel

$$N_B = \left(U - U_{00}\right) \cdot I$$

ermittelt. Der Leistungswert $N_S$ für den Shunt 4 wird nach der Formel

$$N_S = R_S \cdot I^2$$

ermittelt, wobei $R_S$ der Shuntwiderstand ist. Der elektrische Leistungswert $N_{Mess}$ der Messschaltung 6 kann durch eine Temperaturmessung in der Messschaltung 6 sowie gegebenenfalls unter Berücksichtigung der Spannung U, des Stroms I und der Wärmekapazität $C_{Mess}$ der Messschaltung 6 ermittelt werden. Der elektrische Leistungswert $N_{Mess}$ der Messschaltung 6 kann im einfachsten Fall auch als Konstante angenommen werden. Der Shuntwiderstand $R_S$ sowie der elektrische Leistungswert $N_{Mess}$ der Messschaltung 6 müssen nicht unbedingt als Werte bekannt sein, sondern können auch in die zu bestimmenden Konstanten $k_{N1}$ und $k_{N2}$ integriert werden. Die Konstanten k können mittels berechneter Wärmewiderstände beispielsweise mit Hilfe eines Motorraumsimulators oder durch eine Reihe von repräsentativen Messfahrten mit dem jeweiligen Autotyp und Batterietyp bestimmt werden und können dann für alle Fahrzeuge dieser Bauart übernommen werden. Die so gefundenen Konstanten k können von der Temperatur und/oder Fahrsituation abhängen.

Das Verfahren kann noch aufwendiger und präziser durchgeführt werden, wenn weitere Temperaturen $T_i$, wie beispielsweise Motortemperatur, Außentemperatur, Kühlertemperatur, Waschwassertemperatur etc., weitere Wärmequellen, zum Beispiel der Motor, im Fahrzeug sowie weitere Wärmesenken, zum Beispiel Waschwasserbehälter, berücksichtigt werden. Diese müssen nicht sehr genau bekannt sein, sondern können ungefähr geschätzt werden. Dann kann die Batterietemperatur $T_B$ mit folgendem verallgemeinerten Gleichungssystem ermittelt werden:

$$T_B = T_{B-1} + N/C_B \cdot dt + \left\{ \sum_{i=1}^{n} k_i \cdot T_i - k_0 \cdot T_{B-1} \right\}/C_B \cdot dt$$

und

$$N = N_B + k_{N1} \cdot N_S + k_{N2} \cdot N_{Mess} + \sum_{j=3}^{m} k_{Nj} \cdot N_j \;.$$

Manchmal können die Leistungswerte N nicht sauber angegeben werden. Dann ist ein formaler Ansatz der Form:

$$N = N_B + k_{N0} + k_{N1} \cdot I + k_{N2} \cdot I^2$$

sehr nützlich. Dabei werden die Anteile getrennt, die konstant, proportional zum Strom I und proportional zum Quadrat des Stroms $I^2$ sind. Anhand von einigen Versuchen mit stark variierenden Stromwerten I werden die Konstanten k angepasst. Es sind auch analoge Kombinationen mit der Batteriespannung U möglich.

Dabei sollte die Summe der Wichtungsfaktoren $k_i$ für die Temperaturwerte T gleich dem Wichtungsfaktor $k_0$ für die vorhergehend ermittelte Batterietemperatur $T_{B-1}$ sein:

$$\sum_{i=1}^{n} k_i = k_0 .$$

Die Motorleistung kann beispielsweise über die Kühlwasser- und Öltemperatur als Leistungswert $N_j$ oder vorzugsweise als Temperaturwert $T_i$ berücksichtigt werden.

Zur Lösung des Algorithmus ist die Kenntnis der Batterieanfangstemperatur erforderlich. Dazu gibt es verschiedene Wege:

Für lange Pausenzeiten gilt, dass die Batterietemperatur $T_B$ gleich der Messstellentemperatur $T_{Mess}$ ist ($T_B = T_{Mess}$).

Für kürzere Fahrpausen sollte auch in diesem Pausenzeitraum die Batterietemperatur $T_B$ entsprechend dem Algorithmus weiterberechnet werden.

Zur Bestimmung der Konstanten sollten bei verschiedenen Außentemperaturen $T_U$ komplexe Fahrprofile mit dem Fahrzeug gefahren werden, wobei jedes Teilprofil (Stadtfahrt, Autobahnfahrt, Stand) ausreichend lang sein sollte, zum Beispiel zwei Stunden und mehr, und abwechselnd zu einer deutlichen Erwärmung der Batterie B um vorzugsweise mehr als 30°C und wieder zur Abkühlung führen sollte. Zudem sollten zur Ermittlung der Wichtungsfaktoren k stark unterschiedliche Stromlasten i auf der Batterie 1 berücksichtigt werden.

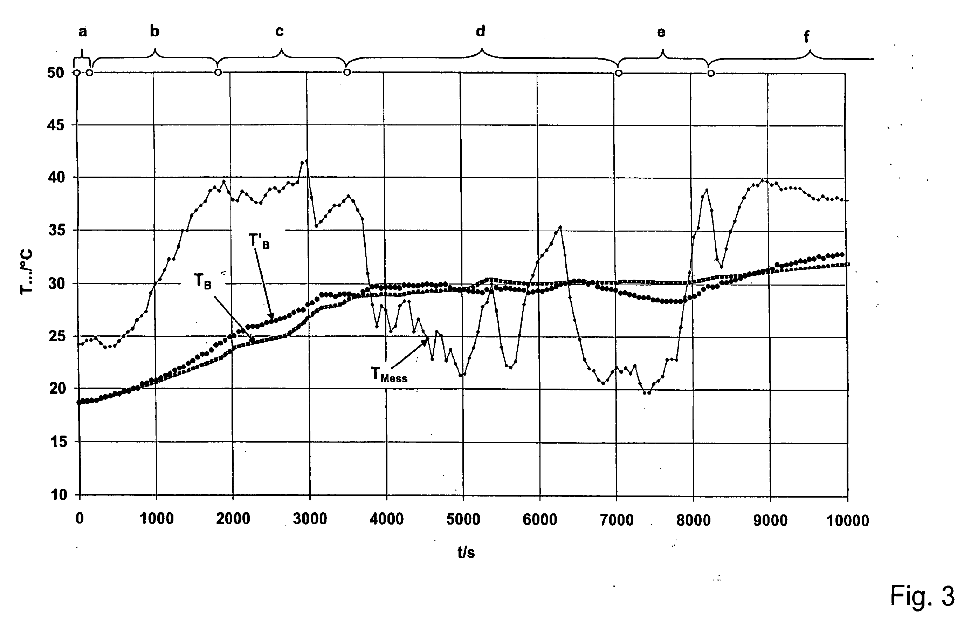

Die Figur 3 lässt ein Diagramm der mit einem Temperatursensor 7 in der Umgebung der Batterie 1 aufgenommene Temperatur $T_{Mess}$, der tatsächlichen Batterietemperatur $T_B$ sowie der mit dem erfindungsgemäßen Verfahren ermittelten Batterietemperatur $T'_B$ über die Zeit t von 10.000 Sekunden erkennen. Bei der untersuchten Batterie 1 handelt es sich um einen Bleiakkumulator mit einer Kapazität von 44 Ah, die in eine Ford Fiesta mit einem 1,4 Liter Benzinmotor eingebaut ist.

Für diesen Batterietyp und Autotyp wurden durch Versuche unter unterschiedlichen Bedingungen und Fahrprofilen bei einer Batteriewärmekapazität von 13.000 Ws/K ein Wichtungsfaktor $k_0$ = 1,487 W, ein Wichtungsfaktor $k_{N0}$ = 0,444 für einen konstanten Leistungsanteil von willkürlich 1 W, ein Wichtungsfaktor $k_{N1}$ = 0,785 V für alle Wärmeleistungen, die proportional zum Batteriestrom I sind, sowie ein Wichtungsfaktor $k_{N2}$ = 7,279 E-3$\Omega$ für alle Wärmeleistungsanteile, die proportional zum Quadrat des Batteriestroms I sind, gefunden.

In einer ersten Phase a) befand sich die Batterie B im Ruhezustand und die Temperatur T war etwa konstant bei ca. 24°C. Anschließend wurde der Motor im Leerlauf ohne Last in einer Phase b) betrieben. Dies führte zu einem Anstieg der gemessenen Temperatur $T_{Mess}$ auf etwa 40°C. Es ist erkennbar, dass die tatsächliche Batterietemperatur $T'_B$ wesentlich geringer ist und von etwa 18°C auf ca. 25°C anstieg. In einer dritten Phase c) wurde der Motor im Leerlauf mit Last, d. h. eingeschalteten Verbrauchern betrieben. Dies führte zu einer Schwankung der gemessenen Batterietemperatur $T_{Mess}$ und einem weiteren Anstieg der Batterietemperatur $T_B$ auf etwa 30°C. Es ist auch erkennbar, dass die mit dem oben beschriebenen Gleichungssystem ermittelten Temperatur $T_B$ in etwa den gleichen Verlauf wie die tatsächliche Batterietemperatur $T'_B$ hat, obwohl die gemessene Temperatur $T_{Mess}$ einen vollkommen anderen Verlauf zeigt. In einer vierten Phase d) wurde das Fahrzeug im Stadtverkehr betrieben. Dies führte zu einer starken Schwankung der gemessenen Temperatur $T_{Mess}$, die durch Verzögerung und Beschleunigung, Lastwechsel und veränderter Konvektion stark beeinflusst wird. Die tatsächliche Batterietemperatur $T'_B$ blieb in der Fahrphase d) annähernd konstant bei 30°C mit leichten Schwankungen. Die ermittelte Batterietemperatur $T_B$ unterscheidet sich im Verlauf nur leicht von der tatsächlichen Batterietemperatur $T'_B$ und ist für eine nachfolgende Auswertung hinreichend genau. In einer fünften Phase e) wurde eine Autobahnfahrt durchgeführt, was nach einer Verzögerung zu einem starken Anstieg der gemessenen Batterietemperatur $T_{Mess}$ wegen des dabei starken Anstiegs der Motortemperatur führt. Die tatsächliche Batterietemperatur $T'_B$ und die aus der gemessenen Batterietemperatur $T_{Mess}$ berechnete Batterietemperatur $T_B$ folgen dem in der kurzen Zeit nicht. In der anschließenden Ruhephase f) klingt die gemessene Temperatur $T_{Mess}$ in der Umgebung der Batterie 1 nach einem kurzen Überschwingen der Temperatur $T_{Mess}$ wegen des noch sehr heißen Motors exponentiell ab. Die tatsächliche Batterietemperatur $T'_B$ sowie die mit dem erfindungsgemäßen Verfahren ermittelte Batterietemperatur $T_B$ zeigen einen von der gemessenen Temperatur $T_{Mess}$ abweichenden Verlauf und stimmen relativ gut überein.

Wie bereits erwähnt kann durch Berücksichtigung weiterer Wärmequellen, Wärmesenken und elektrischer Leistungswerte die Genauigkeit des Verfahrens noch weiter erhöht werden, so dass die Abweichung insbesondere in der Fahrphase d) zwischen ermittelter Batterietemperatur $T_B$ und tatsächlicher Batterietemperatur $T'_B$ verringert wird.

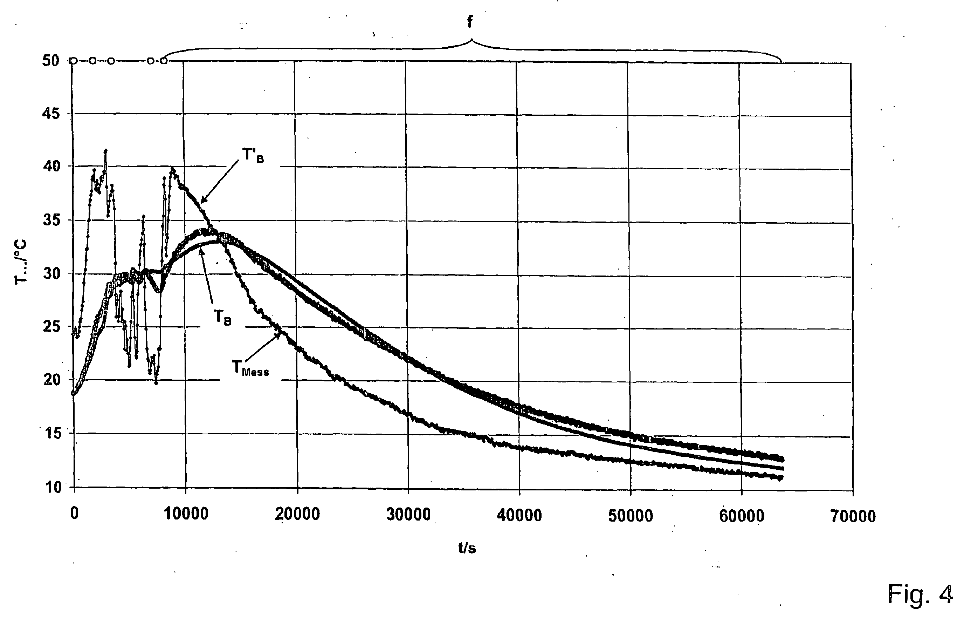

Die Figur 4 zeigt an zwei verschiedenen Tagen durchgeführte Versuche, die in der Darstellung einfach hintereinander gesetzt wurden.

Für eine solche Anordnung wurden bei einer angenommenen Batteriewärmekapazität von $C_B$=14.000 Ws/K ein Wichtungsfaktor $k_0$ = 0,973 W, ein Wichtungsfaktor $k_{N0}$ = -21,951 für einen konstanten Leistungsanteil von 0,5 W am Heizwiderstand, ein Wchtungsfaktor $k_{N1}$= -1,387 V für alle Wärmeleistungen, die proportional zum Batteriestrom I sind, sowie ein Wichtungsfaktor $k_{N2}$= -5,05 E-2$\Omega$ für alle Wärmeleistungsanteile, die proportional zum Quadrat des Batteriestromes $I^2$ sind, gefunden.

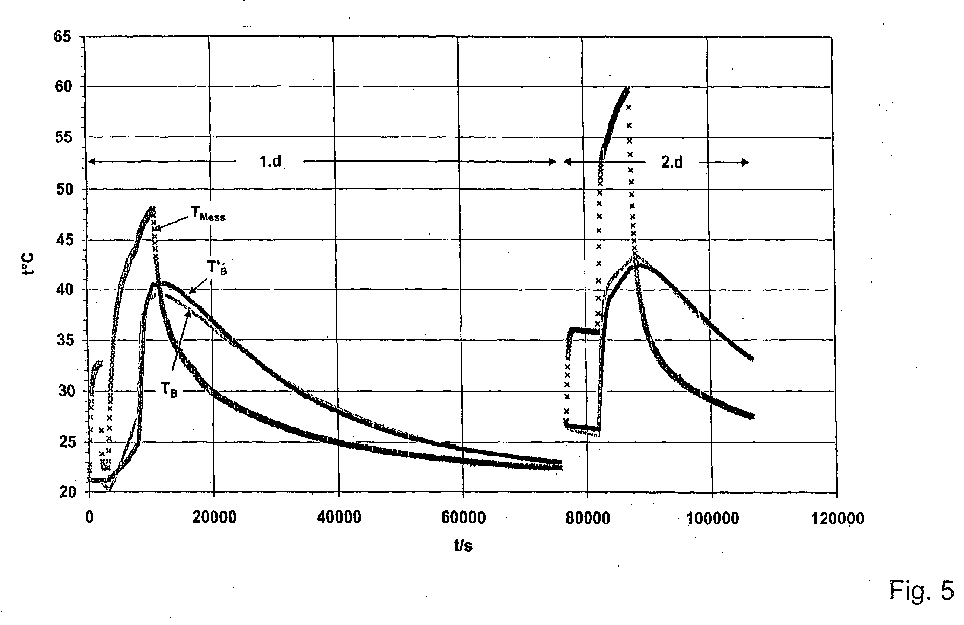

In der Figur 5 ist ein weiteres Beispiel zu erkennen, bei dem ein zusätzlicher elektrischer Wärmeeintrag in der Nähe einer Temperaturmessstelle erfolgt. In einem im Labor nachgebildeten Motorraum wurde eine 12 V Batterie mit 48 Ah verschiedenen Wärme- und Strombelastungen ausgesetzt. In der Nähe der Temperaturmessstelle, die in einem Kunststoffgehäuse am Pol der Batterie angebracht ist, befindet sich ein elektrischer Widerstand, der durch eine definierte Strombelastung eine fest Heizleistung von 0,5 W aufgeprägt bekommt. Hiermit wird die Situation nachgebildet, dass die Temperaturmessstelle räumlich eng mit einer Messschaltung verbunden ist und so die gemessenen Temperatur $T_{Mess}$ durch die elektrische Verlustleistung dieser Messschaltung stark beeinflusst wird.

Nachdem die Heizleistung eingeschaltet wird, erfährt die Temperaturmessstelle nach einigen Minuten eine etwa 11°C höhere Temperatur als die Umgebung. Die Figur 5 zeigt deutlich, dass dennoch der erfindungsgemäße Algorithmus unter Berücksichtung dieser bekannten Heizleistung mit passenden Konstanten k den Verlauf der Batterietemperatur $T_B$ auch in unterschiedlichen Betriebssituationen, wie z. B. Stand, starke Konvektion wie beim Fahrbetrieb, mit ohne elektrische Belastung der Batterie etc., gut nachvollziehen kann.

**Patentansprüche**

1. Verfahren zur Ermittlung der Temperatur ($T_B$) in einer elektrischen Batterie (B) durch Bestimmen mindestens eines Temperaturwertes ($T_M$, $T_i$) an einer jeweiligen Temperaturmessstelle außerhalb der Batterie in der Batterieumgebung, und Ermitteln mindestens eines elektrischen Leistungswertes ($N_B$, $N_j$) in Abhängigkeit von einer mit dem Betrieb der Batterie (B) verknüpften Leistungskenngröße, **dadurch gekennzeichnet, dass** ein weiterer elektrischer Leistungswert ($N_j$) die an der mindestens einen Temperaturmessstelle umgesetzte elektrische Leistung ($N_{Mess}$) ist, die Leistungswerte (N) und die Temperaturwerte (T) jeweils mit einem zugeordneten Wichtungsfaktor (k) gewichtet werden und die Temperatur ($T_B$) in der elektrischen Batterie. (B) aus einer Energiebilanz in Abhängigkeit von dem mindestens einen gewichteten Temperaturwert ($T_M$, $T_i$) und von den gewichteten elektrischen Leistungswerten ($N_B$, $N_j$) ermittelt wird.

2. Verfahren nach Anspruch 1, **gekennzeichnet durch** Integrieren über die Zeit (t) von mindestens einem elektrischen Leistungswert (N) und mindestens einem Temperaturwert (T).

3. Verfahren nach Anspruch 1, **gekennzeichnet durch** Normieren des mindestens einen Leistungswertes (N) und fortlaufendes Aufsummieren des mindestens einen normierten Leistungswertes (N) und mindestens einen Temperaturwertes (T) in diskreten Zeitschritten (dt) zu der unmittelbar vorher ermittelten Batterietemperatur ($T_{B-1}$) zur Ermittlung der aktuellen Batterietemperatur ($T_B$).

4. Verfahren nach einem der vorhergehenden Ansprüche, **dadurch gekennzeichnet, dass** die Wichtungsfaktoren (k) in Abhängigkeit von dem aktuellen Betriebszustand der Batterie (B) gewählt sind.

5. Verfahren nach einem der vorhergehenden Ansprüche, **dadurch gekennzeichnet, dass** eine Leistungskenngröße der an den Batterieklemmen messbare Batterieklemmenstrom (1) ist.

6. Verfahren nach einem der vorhergehenden Ansprüche, **dadurch gekennzeichnet, dass** die Leistungswerte (N) und Temperaturwerte (T) auf die Wärmekapazität ($C_B$) der Batterie (B) bezogen sind.

7. Verfahren nach einem der vorhergehenden Ansprüche, **dadurch gekennzeichnet, dass** die Temperaturwerte ($T_i$)

auf die Wärmekapazität ($C_i$) des zugeordneten Objektes, an dem die Temperatur ($T_i$) bestimmt wird, bezogen sind.

8. Verfahren nach einem der Ansprüche 1 bis 5 **dadurch gekennzeichnet, dass** die Leistungswerte (N) und Temperaturwerte (T) auf die Summe der Wärmekapazität ($C_B$) der Batterie (B) und mindestens einer weiteren Wärmekapazität ($C_i$) eines zum Temperaturausgleich beitragenden Objektes bezogen sind.

9. Verfahren nach einem der Ansprüche 1 bis 5, **dadurch gekennzeichnet, dass** der Temperaturwert ($T_O$) eines zum Temperaturausgleich beitragenden Objektes mit einem Gleichungssystem der Art:

$$T_O = T_{O-1} + (k_{O1} \cdot T_B + k_{O2} \cdot T_{Mess} - k_{O0} \cdot T_{O-1}) / C_O \, dt$$

und

$$k_{O1} + k_{O2} = k_{O0}$$

bestimmt wird, wobei $C_O$ die Wärmekapazität des Objektes, $T_B$ die Batterietemperatur, $T_{Mess}$ die an der Temperaturmessstelle gemessene Temperatur, $T_{O1}$ der zeitlich vorher bestimmte Temperaturwert des Objektes und $k_{O1}$, $k_{O2}$ und $k_{O0}$ festgelegte Konstanten sind.

10. Verfahren nach einem der vorhergehenden Ansprüche zur Ermittlung der Temperatur ($T_B$) einer Fahrzeugbatterie (B), **gekennzeichnet durch** Ermittlung der Batterietemperatur ($T_B$) mit einem Gleichungssystem der Art:

$$T_B = T_{B-1} + N/C_B \cdot dt + \left\{ \sum_{i=1}^{n} k_i \cdot T_i - k_o \cdot T_{B-1} \right\} / C_B \cdot dt,$$

wobei $T_{B-1}$ die vorhergehend berechnete Batterietemperatur $T_B$, $C_B$ die Wärmekapazität der Batterie (B), $k_i$ mit i=1 bis n die Wichtungsfaktoren und $T_i$ mindestens ein (falls n=1) an Objekten i in der Umgebung der Batterie (B) gemessener Temperaturwert (T) ist, und wobei N der Leistungswert ist.

11. Verfahren nach Anspruch 10, **dadurch gekennzeichnet, dass** die Summe der Wichtungsfaktoren $\sum_{i=1}^{n} k_i$ gleich dem Wichtungsfaktor $k_0$ für die vorhergehend ermittelte Batterietemperatur ($T_{B-1}$) ist.

12. Verfahren nach Anspruch 10 oder 11, **dadurch gekennzeichnet, dass** der Leistungswert mit einem Gleichungssystem:

$$N = N_B + \sum_{j=1}^{m} k_j \cdot N_j$$

berechnet wird, wobei $N_B$ ein zu der von der Batterie (B) umgesetzten elektrischen Leistung proportionaler Wert ist, $N_j$ zu von Bauelementen in der Umgebung der Batterie (B) umgesetzte Leistungen proportionale Werte, und $k_j$ Wichtungsfaktoren sind.

13. Verfahren nach Anspruch 12, **dadurch gekennzeichnet, dass** der zu der von der Batterie (B) umgesetzten Leistung proportionale Leistungswert ($N_B$) das Produkt des Batterieklemmenstroms (I) und der Differenz zwischen der Batterieklemmenspannung (U) und der Batterieruhespannung ($U_{00}$) ist ($N_B=(U-U_{00})\cdot I$).

14. Verfahren nach Anspruch 13, **dadurch gekennzeichnet, dass** der Batterieruhespannungswert ($U_{00}$) um einen für das Batteriesystem charakteristischen, konstanten Spannungswert korrigiert wird.

15. Verfahren nach Anspruch 14, **dadurch gekennzeichnet, dass** der konstante Spannungswert für einen Bleiakkumulator im Bereich von -0,04 bis -0,08 V/Zelle vorzugsweise etwas -0,06 V/Zelle beträgt.

16. Verfahren nach Anspruch 12 oder 13, **dadurch gekennzeichnet, dass** ein weiterer elektrischer Leistungswert ($N_j$) die von einem in den Batteriestromkreis geschalteten Shunt (4) umgesetzte Leistung beschreibt und dieser Shunt-Leistungswert ($N_S$) als Produkt des Shuntwiderstands ($R_S$) und dem Quadrat des Batterieklemmenstroms ($I^2$) berechnet wird ($N_S=R_S\cdot I^2$).

17. Verfahren nach einem der vorhergehenden Ansprüche, **dadurch gekennzeichnet, dass** ein weiterer elektrischer Leistungswert ($N_j$) die in einer Messschaltung (6) umgesetzte elektrische Leistung ($N_{ASIC}$) ist und diese elektrische Leistung ($N_{ASIC}$) in Abhängigkeit von dem an der Messschaltung (6) gemessenen Strom ($I_{ASIC}$) und Spannung ($U_{ASIC}$) bestimmt wird.

18. Verfahren nach einem der vorhergehenden Ansprüche, **dadurch gekennzeichnet, dass** die Wichtungsfaktoren (k) von den Wärmeübergangswerten der Batterie (B) und den Wärmeübergangswerten der Umgebung des zugeordneten Objektes abhängig sind.

19. Verfahren nach einem der vorhergehenden Ansprüche, **dadurch gekennzeichnet, dass** die Wichtungsfaktoren (k) in Abhängigkeit von der spezifischen Umgebung, insbesondere von einem Kraftfahrzeugtyp, und dem Batterietyp gewählt werden.

20. Einrichtung zur Ermittlung der Temperatur ($T_B$) in einer elektrischen Batterie (B) mit mindestens einem außerhalb der Batterie (B) in der Batterieumgebung angeordneten Temperatursensor (7), einem Spannungsmessgerät zur Messung der Batterieklemmenspannung (U) und einer Einrichtung zur Ermittlung des Batterieklemmenstroms (I) und mit einer Auswerteeinheit, die mit dem mindestens einen Temperatursensor (7), dem Spannungsmessgerät und der Einrichtung zur Ermittlung des Batterieklemmenstroms verbunden und zur Durchführung des Verfahrens nach einem der vorhergehenden Ansprüche ausgebildet ist.

**Claims**

1. Method for ascertaining the temperature ($T_B$) in an electrical battery (B) by determining at least one temperature value ($T_M$, $T_I$) at a respective temperature measuring point outside the battery in the vicinity of the battery, and ascertaining at least one electrical power value ($N_B$, $N_J$) in dependence on a characteristic power variable associated with the operation of the battery (B), **characterized in that** a further electrical power value ($N_J$) is the electrical power ($N_{Mess}$) converted at the at least one temperature measuring point, the power values (N) and the temperature values (T) are in each case weighted with an assigned weighting factor (k) and the temperature ($T_B$) in the electrical battery (B) is ascertained from an energy balance in dependence on the at least one weighted temperature value ($T_M$, $T_I$) and the weighted electrical power values ($N_B$, $N_J$).

2. Method according to Claim 1, **characterized by** integrating over time (t) at least one electrical power value (N) and at least one temperature value (T).

3. Method according to Claim 1, **characterized by** normalizing the at least one power value (N) and continuously summating the at least one normalized power value (N) and at least one temperature value (T) in discrete time steps (dt) from the immediately previously ascertained battery temperature ($T_{B-1}$) to ascertain the current battery temperature ($T_B$).

4. Method according to one of the preceding claims, **characterized in that** the weighting factors (k) are chosen in dependence on the current operating state of the battery (B).

5. Method according to one of the preceding claims, **characterized in that** a characteristic power variable is the battery terminal current (I) that can be measured at the battery terminals.

6. Method according to one of the preceding claims, **characterized in that** the power values (N) and temperature values (T) are related to the thermal capacity ($C_B$) of the battery (B).

7. Method according to one of the preceding claims, **characterized in that** the temperature values ($T_I$) are related to the thermal capacity ($C_i$) of the assigned object at which the temperature ($T_I$) is determined.

8. Method according to one of Claims 1 to 5, **characterized in that** the power values (N) and temperature values (T) are related to the sum of the thermal capacity ($C_B$) of the battery (B) and at least one further thermal capacity ($C_I$) of an object contributing to the temperature equalization.

9. Method according to one of Claims 1 to 5, **characterized in that** the temperature value ($T_O$) of an object contributing to the temperature equalization is determined with a system of equations of the kind:

$$T_O = T_{O-1} + (k_{O1} \cdot T_B + k_{O2} \cdot T_{Mess} - k_{O0} \cdot T_{O-1}) / C_O \, dt$$

and

$$k_{O1} + k_{O2} = k_{O0}$$

where $C_O$ is the thermal capacity of the object, $T_B$ is the battery temperature, $T_{Mess}$ is the temperature measured at the temperature measuring point, $T_{O-1}$ is the temperature value of the object determined previously in time and $k_{O1}$, $k_{O2}$ and $k_{O0}$ are fixed constants.

10. Method according to one of the preceding claims for ascertaining the temperature ($T_B$) of a vehicle battery (B), **characterized by** ascertaining the battery temperature ($T_B$) with a system of equations of the kind:

$$T_B = T_{B-1} + N / C_B \cdot dt + \left\{ \sum_{i=1}^{n} k_i \cdot T_i - k_o \cdot T_{B-1} \right\} / C_B \cdot dt \, ,$$

where $T_{B-1}$ is the previously calculated battery temperature $T_B$, $C_B$ is the thermal capacity of the battery (B), $k_i$ with i=1 to n are the weighting factors and $T_i$ is at least one (if n=1) temperature value (T) measured at objects i in the vicinity of the battery (B), and where N is the power value.

11. Method according to Claim 10, **characterized in that** the sum of the weighting factors $\sum_{i=1}^{n} k_i$ is equal to the weighting factor $k_O$ for the previously ascertained battery temperature ($T_{B-1}$).

12. Method according to Claim 10 or 11, **characterized in that** the power value is calculated with a system of equations:

$$N = N_B + \sum_{j=1}^{m} k_j \cdot N_j$$

where $N_B$ is a value proportional to the electrical power converted by the battery (B), $N_J$ are values proportional to powers converted by components in the vicinity of the battery (B), and $k_j$ are weighting factors.

13. Method according to Claim 12, **characterized in that** the power value ($N_B$) proportional to the power converted by the battery (B) is the product of the battery terminal current (I) and the difference between the battery terminal voltage (U) and the battery open-circuit voltage ($U_{00}$) ($N_B=(U-U_{00})\cdot I$).

14. Method according to Claim 13, **characterized in that** the battery open-circuit voltage value ($U_{00}$) is corrected by a constant voltage value characteristic of the battery system.

15. Method according to Claim 14, **characterized in that** the constant voltage value for a lead-acid storage battery is in the range from -0.04 to -0.08 V/cell, preferably approximately -0.06 V/cell.

16. Method according to Claim 12 or 13, **characterized in that** a further electrical power value ($N_J$) describes the power converted by a shunt (4) introduced into the battery circuit, and the shunt power value ($N_S$) is calculated as the product of the shunt resistance ($R_S$) and the square of the battery terminal current ($I^2$) ($N_S=R_S\cdot I^2$).

17. Method according to one of the preceding claims, **characterized in that** a further electrical power value (Nj) is the electrical power ($N_{ASIC}$) converted in a measuring circuit (6), and this electrical power ($N_{ASIC}$) is determined in dependence on the current ($I_{ASIC}$) and voltage ($U_{ASIC}$) measured at the measuring circuit (6).

18. Method according to one of the preceding claims, **characterized in that** the weighting factors (k) are dependent on the heat transfer values of the battery (B) and the heat transfer values of the vicinity of the assigned object.

19. Method according to one of the preceding claims, **characterized in that** the weighting factors (k) are chosen in dependence on the specific vicinity, in particular on the type of a motor vehicle, and the type of battery.

20. Device for ascertaining the temperature ($T_B$) in an electrical battery (B) having at least one temperature sensor (7), arranged outside the battery (B) in the vicinity of the battery, a voltmeter for measuring the battery terminal voltage (U) and a device for ascertaining the battery terminal current (I) and having an evaluation unit, which is connected to the at least one temperature sensor (7), the voltmeter and the device for ascertaining the battery terminal current, and is designed for carrying out the method according to one of the preceding claims.

**Revendications**

1. Procédé pour déterminer la température ($T_B$) d'une batterie électrique (B) en déterminant au moins une valeur de température ($T_M$, $T_i$) à un point de mesure respectif de température extérieur à la batterie dans l'environnement de la batterie et détermination d'au moins une valeur de puissance électrique ($N_B$, $N_j$) en fonction d'une grandeur caractéristique de la puissance liée au fonctionnement de la batterie (B),
   **caractérisé en ce qu'**
   une autre valeur de puissance électrique ($N_j$) est la puissance électrique ($N_{Mess}$) convertie en au moins un point de mesure de température, on pondère les valeurs de puissance (N) et les valeurs de température (T) chaque fois avec un coefficient de pondération associé (k) et on détermine la température ($T_B$) dans la batterie électrique (B) à partir d'un bilan énergétique en fonction d'au moins une valeur de température pondérée ($T_M$, $T_i$) et des valeurs de puissances électriques ($N_B$, $N_j$).

2. Procédé selon la revendication 1,
   **caractérisé par**
   l'intégration en fonction du temps (t) d'au moins une valeur de puissance électrique (N) et d'au moins une valeur de température (T).

3. Procédé selon la revendication 1,
   **caractérisé en ce qu'**
   on normalise au moins une valeur de puissance (N) et on additionne en continu au moins cette valeur de puissance normalisée (N) et au moins une valeur de température (T) dans des étapes de temps (dt), discrètes, à la température de la batterie ($T_{B-1}$) déterminée immédiatement avant pour déterminer la température actuelle ($T_B$) de la batterie.

**4.** Procédé selon l'une des revendications précédentes,
**caractérisé en ce qu'**
on sélectionne les facteurs de pondération (k) selon l'état de fonctionnement actuel de la batterie (B).

**5.** Procédé selon l'une des revendications précédentes,
**caractérisé en ce qu'**
une grandeur caractéristique de la puissance est le courant (I) mesurable sur les bornes de la batterie.

**6.** Procédé selon l'une des revendications précédentes,
**caractérisé en ce qu'**
on rapporte les valeurs de puissance (N) et les valeurs de température (T) à la capacité calorifique ($C_B$) de la batterie (B).

**7.** Procédé selon l'une quelconque des revendications précédentes,
**caractérisé en ce que**
les valeurs de température ($T_I$) sont rapportées à la capacité calorifique ($C_I$) de l'objet concerné sur lequel on détermine la température ($T_I$).

**8.** Procédé selon l'une des revendications 1 à 5,
**caractérisé en ce que**
les valeurs de puissance (N) et les valeurs de température (T) sont rapportées à la somme de la capacité calorifique ($C_B$) de la batterie (B) et d'au moins une autre capacité calorifique ($C_I$) d'un objet participant à l'équilibrage des températures.

**9.** Procédé selon l'une des revendications 1 à 5,
**caractérisé en ce que**
la valeur de la température ($T_O$) d'un objet participant à l'équilibrage de la température se définit par un système d'équation du type suivant :

$$T_O = T_{O-1} + (k_{O1} \cdot T_B + k_{O2} \cdot T_{Mess} - k_{O0} \cdot T_{O-1})/C_O \; dt$$

et

$$k_{O1} + k_{O2} = k_{O0}$$

relations dans lesquelles $C_O$ est la capacité calorifique de l'objet, $T_B$ est la température de la batterie, $T_{Mess}$ est la température $T_{O-1}$ mesurée au point de mesure de la température correspondant à la valeur de la temperature de l'objet défini antérieurement et $k_{O1}$, $k_{O2}$ et $k_{O0}$ sont des constantes fixes.

**10.** Procédé selon l'une des revendications précédentes pour déterminer la température ($T_B$) d'une batterie de véhicule (B),
**caractérisé en ce qu'**
on détermine la température de la batterie ($T_B$) avec un système d'équation du type suivant :

$$T_B = T_{B-1} + N/C_B \cdot dt + \left\{ \sum_{i=1}^{n} k_i \cdot T_i - k_a \cdot T_{B-1} \right\}/C_B \cdot dt \; ,$$

relation dans laquelle $T_{B-1}$ est la température de batterie $T_B$ calculée précédemment, $C_B$ est la capacité calorifique de la batterie (B), $k_i$ avec i=1 jusqu'à i=n représente des coefficients de pondération $T_i$ représente au moins une valeur de température (T) mesurée sur au moins un (dans le cas n=1) objet i dans l'environnement de la batterie (B), N étant la valeur de la puissance.

**11.** Procédé selon la revendication 10,
**caractérisé en ce que**

la somme des facteurs de pondération $\sum_{i=1}^{n} k_1$ est égale au facteur de pondération $k_0$ pour la température de batterie (TB-1) déterminée au préalable.

**12.** Procédé selon la revendication 10 ou 11,
**caractérisé en ce que**
la valeur de la puissance se calcule par le système d'équation suivante :

$$N = N_B + \sum_{j=1}^{m} k_j \cdot N_j$$

dans laquelle $N_B$ est une valeur proportionnelle à la puissance électrique convertie par la batterie (B), $N_j$ représente des valeurs proportionnelles aux puissances converties par des composants dans l'environnement de la batterie (B) et $k_j$ représente des coefficients de pondération.

**13.** Procédé selon la revendication 12,
**caractérisé en ce que**
la valeur de la puissance ($N_B$) proportionnelle à la puissance convertie par la batterie (B) est le produit du courant (I) aux bornes de la batterie et de la différence entre la tension (U) aux bornes de la batterie et la tension ($U_{00}$) de la batterie est [$N_B = (U - U_{00}) \cdot I$].

**14.** Procédé selon la revendication 13,
**caractérisé en ce que**
la valeur de la tension au repos de la batterie ($U_{00}$) est corrigée par une valeur de tension constante caractéristique du système de batterie.

**15.** Procédé selon la revendication 14,
**caractérisé en ce que**
la valeur de tension constante pour un accumulateur au plomb se situe dans une plage comprise entre -0,04 jusqu'à -0,08 V/cellule, de préférence de l'ordre de -0,06 V/cellule.

**16.** Procédé selon les revendications 12 ou 13,
**caractérisé en ce qu'**
une autre valeur de puissance électrique ($N_j$) décrivant la puissance convertie par le shunt (4) branché dans le circuit de courant de la batterie et cette valeur de puissance shunt ($N_S$) est le produit de la résistance shunt ($R_S$) et du carré du courant aux bornes de la batterie ($I^2$) ($N_S = R_S \cdot I^2$).

**17.** Procédé selon l'une des revendications précédentes,
**caractérisé en ce qu'**
une autre valeur de puissance électrique ($N_j$) qui est la puissance électrique ($N_{ASIC}$) convertie dans un circuit de mesure (6) et la puissance électrique ($N_{ASIC}$) se déterminent en fonction du courant ($I_{ASIC}$) mesuré par le circuit de mesure (6) et de la tension ($U_{ASIC}$).

**18.** Procédé selon l'une des revendications précédentes,
**caractérisé en ce que**
les facteurs de pondération (k) dépendent des valeurs de transfert thermique de la batterie (B) et des valeurs de transfert thermique de l'environnement de l'objet associé.

**19.** Procédé selon l'une quelconque des revendications précédentes,
**caractérisé en ce que**
les coefficients de pondération (k) sont choisis en fonction de l'environnement spécifique, notamment d'un certain type de véhicule et du type de batterie.

**20.** Installation pour déterminer la température ($T_B$) dans une batterie électrique (B) ayant au moins un capteur de température (7) à l'extérieur de la batterie, dans l'environnement de la batterie, un appareil de mesure de tension pour mesurer la tension (U) aux bornes de la batterie et une installation pour déterminer le courant (I) aux bornes de la batterie ainsi qu'une unité d'exploitation reliée à au moins un capteur de température (7), au moins un appareil de mesure de tension et à l'installation pour déterminer le courant dans les bornes de la batterie, réalisé pour la mise en oeuvre du procédé selon l'une des revendications précédentes.

Fig. 1

Fig. 2

Fig. 3

EP 1 688 722 B1

Fig. 4

EP 1 688 722 B1

Segment

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19806135 A1
- US 5079716 A
- US 5711605 A
- DE 10131259 A1
- US 4342963 A
- DE 10208651 A1
- DE 10134065 A1